(19) Europäisches Patentamt
European Patent Office
Office européen des brevets

(11) **EP 4 428 774 B1**

(12) **EUROPEAN PATENT SPECIFICATION**

(45) Date of publication and mention
of the grant of the patent:
**01.10.2025 Bulletin 2025/40**

(51) International Patent Classification (IPC):
***G06Q 10/04*** *(2023.01)*

(21) Application number: **23161301.9**

(52) Cooperative Patent Classification (CPC):
**G06Q 10/04**

(22) Date of filing: **10.03.2023**

(54) **METHOD FOR ROBUST CONTROLLING A WATER DISTRIBUTION NETWORK**

VERFAHREN ZUR ROBUSTEN STEUERUNG EINES WASSERVERTEILUNGSNETZES

PROCÉDÉ DE COMMANDE ROBUSTE D'UN RÉSEAU DE DISTRIBUTION D'EAU

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**11.09.2024 Bulletin 2024/37**

(73) Proprietor: **ABB SCHWEIZ AG
5400 Baden (CH)**

(72) Inventors:
• **LENDERS, Felix
64293 Darmstadt (DE)**
• **BISKOPING, Matthias
69493 Hirschberg (DE)**
• **FOKKEN, Eike
69214 Eppelheim (DE)**
• **GUTERMUTH, Georg
69115 Heidelberg (DE)**
• **LAURICELLA, Marco
68199 Mannheim (DE)**
• **PRIMAS, Bernhard
68165 Mannheim (DE)**
• **SCHLOEDER, Matthias
69126 Heidelberg (DE)**

(74) Representative: **Maiwald GmbH
Engineering
Elisenhof
Elisenstrasse 3
80335 München (DE)**

(56) References cited:
**WO-A1-2013/026731    WO-A1-2021/117845
US-B2- 11 500 399**

• **SHEN WANG ET AL: "Receding Horizon Control
for Drinking Water Networks: The Case for
Geometric Programming", ARXIV.ORG,
CORNELL UNIVERSITY LIBRARY, 201 OLIN
LIBRARY CORNELL UNIVERSITY ITHACA, NY
14853, 7 September 2019 (2019-09-07),
XP081567250**
• **ARAUJO L S ET AL: "Pressure Control for
Leakage Minimisation in Water Distribution
Systems Management", WATER RESOURCES
MANAGEMENT ; AN INTERNATIONAL JOURNAL
- PUBLISHED FOR THE EUROPEAN WATER
RESOURCES ASSOCIATION (EWRA), KLUWER
ACADEMIC PUBLISHERS, DO, vol. 20, no. 1, 1
February 2006 (2006-02-01), pages 133 - 149,
XP019270885, ISSN: 1573-1650**
• **GUO YI ET AL: "Optimal Pump Control for Water
Distribution Networks via Data-Based
Distributional Robustness", IEEE
TRANSACTIONS ON CONTROL SYSTEMS
TECHNOLOGY, IEEE SERVICE CENTER, NEW
YORK, NY, US, vol. 31, no. 1, 1 January 2023
(2023-01-01), pages 114 - 129, XP011931151,
ISSN: 1063-6536, [retrieved on 20220429], DOI:
10.1109/TCST.2022.3167844**

**Description**

Background

Water distribution networks are often operated in a conservative manner that ensures satisfaction of minimum pressure across the network and satisfaction of water demand on all demand nodes with a large safety margin. This conservatism comes at the price of high energy cost for pump operations. The document WO2013026731 A1 discloses a generic method for controlling a water distribution network using optimization.

Detailed description of the invention

The appended claims disclose the present invention.

Operation of a water distribution network is given to a large extent by choosing set-points of water pumps in the network and by opening and closing valves. As a consequence of this set-points, tanks within the water distribution network fill up or are emptying. Conservative operation often result in high water tank levels to be used as a buffer to react on deviations on water demand forecasts. Such deviation of a water demand forecast may be caused by non-normal events such as soccer games or unusually dry periods not captured in typical seasonal variations of water demand forecasts.

For reliable operation of the water distribution network, ensuring pressure targets across the network and adequate coverage of water demand is high priority, while energy consumption for operating the network is second. This results often in a conservative operation mode with a large safety margin and a corresponding high energy consumption.

Using optimization based on demand forecasts and a hydraulic model of the network, the resulting cost, e.g. for pump operations, can be reduced. Decision support systems proposing set-points for operating pumps and valve positions on a certain time horizon based on minimizing operation cost of the water distribution network are less conservative than a typical operation of the water distribution network. If no safety margin is considered for the optimization process, applying these set-points for the operation of actuators, as for instance for pumps and valves, can lead to pressure drops within the network, empty water supply nodes, like water tanks or an inability to satisfy a water demand in case of unforeseen deviations. Consequently, such proposals, resulting from a nominal optimization process, are often discarded because of a risk of a critical solution.

Furthermore, simply re-optimizing with varied demand data and varied initial tank level data is not feasible in a real-time context as solving a corresponding optimization problem is computationally expensive with a duration for computation in the minutes to hours time range.

Accordingly, the present invention is directed to a method for controlling a water distribution network, a control device for controlling a water distribution network, a use of the method for safety controlling a water distribution network, a use of the method to verify a sequence of control variable values, a computer program and a computer-readable storage medium as described in the independent claims. Advantageous modifications of the invention are stated in the dependent claims.

All combinations of at least two of the features disclosed in the description, the claims, and the figures fall within the scope of the invention. In order to avoid repetition, features disclosed in accordance with the method shall also apply and be claimable in accordance with mentioned systems.

In this entire description of the invention, the sequence of procedural steps is presented in such a way that the process is easily comprehensible. However, the skilled person will recognize that many of the process steps can also be executed in a different order and lead to the same or a corresponding result. In this sense, the sequence of the process steps can be changed accordingly. Some features are provided with counting words to improve readability or to make the assignment more clear, but this does not imply the presence of certain features.

To achieve these and other advantages and in accordance with the purpose of the invention, as embodied and broadly described herein, there is provided a method for controlling a water distribution network, wherein the method includes the following steps.

In one step a hydraulic model for characterizing the water distribution network is provided. In a further step a start sequence of control variable values for each of at least one actuator of the water distribution network is provided. In a further step an initial hydraulic head value for each of at least one water supply node of the water distribution network is provided. In a further step an objective for optimized controlling the water distribution network is provided. In a further step a forecast of a sequence of nominal values of a water demand for each at least one water demand node of the water distribution network within a time horizon is provided. Additionally in a further step an associated uncertainty range for each nominal value of the water demand is provided.

Additionally in a further step a sequence of control variable values for each of the at least one actuator for controlling the water distribution network is determined based on a continuous optimization problem for controlling the water distribution network with respect to the objective, wherein a solver module for the continuous optimization problem is configured for being started based on the provided initial hydraulic head value for each of the at least one water supply node and/or based on the provided initial sequence of control variable values; and based on the provided forecast; and wherein the values of the control variables are optimized under consideration of the provided water demand uncertainty range for each at least one water demand node; and wherein the sequence of control variable values are determined to be provided to the at least one actuator for controlling the water distribution network within the time horizon.

Alternatively or additionally, the determined sequence of control variable values are provided to the at least one actuator for controlling the water distribution network within the time horizon.

The hydraulic model for characterizing the water distribution network can be described and/or characterized including a topology of the water distribution network including components of the water distribution network and/or corresponding constraints related to the components and/or corresponding constraints to specific arrangements of the components. The hydraulic model and/or the constraints can preferably include boundary conditions for components and dependent variables of the water distribution network.

Components of the water distribution network can include actuators, like different types of pumps and/or different types of valves and/or supply nodes and/or demand nodes and wherein the nodes and/or actuators are fluidly coupled by tubes. Alternatively, the different types of nodes can be linked by actuators and/or tubes.

The corresponding constraints can be related to the components and/or the topology of the water distribution network. The corresponding constraints can include physical constraints in respect to a specific component, which can be related to mass and/or energy conservation, e.g. in respect to a sum of water flows to a node and from a node and/or a water flow into a tank and out of the tank and/or water pressure and water flow at both sides of an actuator and/or a note, wherein a node can include e.g. a coupling of at least two tubes.

The sequence of control variable values for each of at least one actuator of the water distribution network can be a timely sequences for each of the control variables for each of the at least one actuator, preferably within the time horizon, of values for the respective control variables for controlling the respective actuators.

The time horizon can be a time span of the provided forecast of the sequence of nominal values of the water demand and/or a time span of the sequence of the control variable values.

The start sequence of control variable values for each of the at least one actuator can be, e.g., a sequence of feasible control variable values for starting the solver module.

As discussed in more detail below the start sequence of the control variable values can be provided by experts and/or by historical control variable values determined during a period of operation of the water distribution network and/or by a simulation based on the hydraulic model of the water distribution network.

The initial hydraulic head value for each of the at least one water supply node of the water distribution network can be determined and provided at the beginning at $t = t_0$ of the determination of the sequence of control variable values, for instance by measurement.

The initial hydraulic head value can be related to the start sequence of the control variable values for feasibility of this combination for starting the solver module.

The initial hydraulic head value for each of at least one water supply node of the water distribution network can be a hydraulic height of the water level within a respective tank or the hydraulic height of a water reservoir. As an example for a hydraulic head value the level of water within a water tank can be determined by a measurement.

The objective for optimized controlling the water distribution network can be a target for optimization of the controlling of the water distribution network, as for instance a power consumption of the actuators and/or a consumed energy of the water distribution network and/or energy costs, particularly for the actuators, of the water distribution network and/or a maximum pressure within the water distribution network and/or a number of starts and/or stops of the at least one actuator of the water distribution network. The objective can also be a combination of the mentioned individual objectives, particularly a weighted sum of individual objectives.

The forecast of the sequence of nominal values of a water demand for each at least one water demand node of the water distribution network can be used for determining the sequence of control variable values for each of the at least one actuator based on the continuous optimization problem. For controlling the water distribution network based on a continuous optimization problem the determined sequence of control variable values typically can change with a changed forecast for the sequence of nominal values of a water demand for each at least one water demand node.

The uncertainty range for each nominal value of the water demand can enable to determine the sequence of control variable values for each of the at least one actuator considering a robust optimization that takes into account the respective uncertainty range.

The presence of pumping set-points and valve positions as degrees of freedom in the optimization problem of the water distribution network can introduce discrete decisions into the optimization problem, which can lead to a mixed-integer nonlinear programming problem. Unfortunately, no general hot-starting algorithms exist for mixed-integer programming problems for providing a fast convergence if started close to the solution.

Because for optimization problems that depend on integer variables, no general techniques for hot-starting are available a continuous formulation based on complementarity constraints for the actuators is proposed with this method for controlling the water distribution network. The optimization problem, which is based on complementary constraints for the actuators, like pumps and valves of the water distribution network, is formulated as continuous problem, for which well-established warm-starting techniques exist. This allows for using continuous optimization techniques for solving the optimization problem. Such a method is advantageous in comparison to a heuristic approach based on genetic algorithms, which is not able to be warm-started.

Using the continuous problem formulation enables the solver module to be warm-started.

That can mean, that every time, a new optimization problem is solved, warm-starting in the solution of a previous optimization run can speed up the solution process and this way turn it computationally feasible for real-time applications.

The continuous optimization problem can be characterized by consisting exclusively of continuous control variables and continuous dependent variables.

Dependent variables can be variables characterizing the water distribution network, as e.g. a sequence of hydraulic head values within the water distribution network and/or a sequence of pressure values within the water distribution network and/or water flow within the water distribution network, which can be determined based on the sequence of control variable values for each of the at least one actuator and the initial hydraulic head value of the water supply nodes and the demand at the demand nodes

The continuous optimization problem comprises an objective function, which encodes an objective for optimized controlling, like a cost for operating the water distribution network, resulting from a chosen strategy to steer the system, which is preferably represented by a sequence of control variables values, wherein the objective should be minimized.

Among all options to steer the system, which can be encoded in the control variables, the optimization aims to find a sequence of control variables values, which is at least locally optimal in view of the corresponding objective function value, i.e., result in a minimum possible value of the objective function. A 'solution' of the optimization problem are those variable values, which satisfy all constraints of the optimization problem and lead to the least possible objective function value.

While a certain first option to steer the water distribution network can be the best for a given first sequence of nominal values of the respective water demand, for a given second sequence of nominal values of the respective water demand a second option to steer the water distribution network can be optimal.

The described method can determine a solution of a robust optimization problem, where a fixed water demand is replaced by uncertainty ranges for the water demand at the at least one water demand node. These uncertainty ranges can be considered in the robustified optimization problem. One method would be to 'optimize the worst case', i.e., among all control strategies that produce feasible solutions within the demand range, seek for that strategy which results in the least possible worst-case value of the objective function, wherein the objective function value depends on both, the control strategy but also the realization of the water demand.

That means that the robust optimization takes into account all variations within the uncertainty range and selects an optimal sequence of control variables values, as e.g. a set point for a given actuator, while respecting the possible uncertainties of the system.

That can mean, that the set points for the actuators, the sequence of control variable values for each of at least one actuator, as e.g. pumps, valves etc., are chosen in a way that the system is stable, e.g. all constraints, like fill level of tanks, max. pressure in pipes, are respected and the water demand at a node for water delivery to a customer can be satisfied for the time horizon, even if there are uncertainties within the uncertainty range during this time period.

The method for controlling the water distribution network as described above, can be considered "robust" because the values of the control variables can be optimized under consideration of the demand uncertainty range for each of the at least one water demand node and/or because, as described below, the values of the control variables can be optimized under consideration of an uncertainty range for the initial hydraulic head value for each of the at least one water supply node of the water distribution network.

Using other words, a robust optimization problem is solved under consideration of uncertainties on demand forecasts and tank level measurements. This is different to solving the operational cost minimization problem with nominal data given by demand forecasts for demand nodes and tank level measurements at the initial time point.

Advantageously, the described method above for controlling a water distribution network can provide a robust optimization method for determining the sequence of the control variable values, what means that the values of the control variables can be optimized under consideration of the demand uncertainty range for each of the at least one water demand node.

Alternatively or additionally, the determined sequence of control variable values, which can result from the robust optimization process, can be provided to the at least one actuator for controlling the water distribution network. The determined sequence of control variable values, preferably resulting from the robust optimization process, can be intended to be provided to the at least one actuator for controlling the water distribution network within the time horizon.

In robust optimization, a scenarios can be considered, where a sequence of nominal values of a water demand is not perfectly known in advance, but suffers from uncertainty, which could be bounded, e.g., to a certain range, or is governed by a certain probability distribution.

In particular, for a given first option to steer the water distribution network and an uncertain sequence of nominal values of a water demand u, the objective function value reduces to an objective function in the variable u. The maximum of this function is realized if the so-called "worst-case demand" materializes, i.e., the sequence of nominal values of a water demand, which causes the highest possible costs in presence of the chosen control strategy.

Using other words, all demanding households still get water and the water distribution network does not fail if the demand of the households behaves slightly different than forecasted nominal value, as long as they are within the ranges of uncertainty.

Advantageously, by providing a robust optimization process for determining the sequence of control variable values and the provided warm start capability of the robust optimization process, the described method can be used for real-time applications.

Advantageously, the method for controlling a water distribution network can provide sequences of control variable values, like e.g. pump power set-points and valve positions, within a water distribution network that, for instance, minimize an worst-case operation cost objective function and/or can optimize the worst-case operation cost of the water distribution network and this way can provide a robust control for a range of scenarios, wherein the scenarios include uncertainty ranges for the water demand and/or the initial hydraulic head value.

The robust optimization problem can be formulated according to Eq. 1:

$$\min_x \max_{u \in U} f(x) \text{ s.t. } g(x) = 0, \quad d_n^{\text{ro}}(x,t) = d_n(t) + u_n(t), \quad h_{\text{ta}}^{\text{ro}}(x,t_0) = h_{\text{ta}}^{\text{meas}}(t_0) + u_{\text{ta}}.$$

In here, x is a collection of variables, comprising physical quantities for characterizing the hydraulic model of the water distribution network and particularly includes control variables as: pump power set-points for all time points on a time discretization of the time horizon, and all valve positions for all these time points and dependent variables as: flow and hydraulic head values for the related elements of the water distribution network.

In this way, the values of the control variables are optimized under consideration of the provided water demand uncertainty range for each at least one water demand node.

| | |
|---|---|
| $g(x) = 0$ | ; Eq. 2, denotes the hydraulic model; and |
| $d_n^{\text{ro}}(x,t)$ | denotes a determined water supply d at time $t$ and at node n, similar |
| $h_{\text{ta}}^{\text{ro}}(x,t_0)$ | denotes a determined hydraulic head h, e.g. a tank ta level, at an initial time $t_0$ of the time horizon. |

That means, input data for this robust optimization problem is a topology of the water distribution network and/or technical parameters of elements of the topology of the water distribution network, as described based on term: $g(x) = 0$ of equation 1.

The initial tank level measurement is: $h_{\text{ta}}^{\text{meas}}(t_0)$ and the forecast is: $d_n(t)$ for the water demand at node n.

It is assumed, that the network topology is accurately characterized and can be described without uncertainties, while there are uncertainties for hydraulic head resp. tank level measurements, e.g. due to delay of faulty sensor equipment, and uncertainties in the water demand forecast:

It is assumed, that for the real tank level $h_{\text{ta}}^{\text{real}}(t)$ the following relation holds:

$$h_{\text{ta}}^{\text{real}}(t) - h_{\text{ta}}^{\text{meas}}(t) \in U_{\text{ta}}, \qquad ; \text{Eq. 3}$$

where $U_{\text{ta}}$ is a set of a possible uncertainty range , e.g. $U_{\text{ta}} = (-\varepsilon, \varepsilon)$ an interval that covers possible uncertainty ranges.

It is further assumed, that for the real demands $d_n^{\text{real}}(t)$ and demand node forecasts $d_n(t)$ the following relation holds:

$$d_n^{\text{real}}(t) - d_n(t) \in U_n(t), \qquad ; \text{Eq. 4}$$

where $U_n(t)$ is a set of possible deviations at time $t$ and could e.g. be again given by an interval.

Let

$$U = \prod_n U_n \times \prod_{\text{ta}} U_{\text{ta}} \qquad ; \text{Eq. 5}$$

be a Cartesian product of all uncertainty sets which summarizes or aggregates all individual uncertainties in a large uncertainty U.

The robust formulation of the continuous optimization problem of equation 1 gives a worst case robustification. More sophisticated and less conservative approaches are possible by invoking stochastic optimization via the introduction of a probability distribution on the uncertainty set and replacing the worst case objective

$\max_{u \in U} f(x)$ by an expectation $E_{u \in U} f(x)$ and by specifying probabilities with which the uncertain constraints

$$d_n^{\text{sim}} = d_n(t) + u_n(t), \qquad h_{\text{ta}}^{\text{sim}}(x, t_0) = h_{\text{ta}}^{\text{meas}}(t_0) + u_{\text{ta}} \quad ; \text{Eq. 6, 7}$$

have to hold in the sense of chance constraints.

However, for water distribution networks integer decisions, i.e., on/off decisions, are still included. The resulting problem belongs to the class of Mixed Integer Nonlinear Programming Problems (MINLP). MINLPs are difficult so solve and in particular do not allow for a warm-start.

The choice of the integer variables furthermore influences the physical constraints that govern the system, if e.g. a pump is closed, in and out-pressure are independent from each other, which does not hold if the pump is open.

For water distribution networks, the optimization problem has a certain structure: any links like pumps or valves in the system can approximately be identified as open when the flow is greater than zero, and closed if the flow is zero. This way, the integer decision on/off can be evaluated by considering the flow of the water within the water distribution network.

By reformulation of the problem, which transfers the problem into a so-called Mathematical program with complementarity constraints (MPCC) with only continuous variables, where the shutting on/and off of certain links and therefore also the presence of certain constraints is expressed by only continuous variables.

These type of problems can be solved with methods described in the scientific literature. Since this optimization problem includes continuous variables only, it can be warm-started.

The complementarity based continuous reformulation of the discrete switching decisions for pumps and valves convert the mixed-integer nonlinear programming problem into a nonlinear programming problem without integer variables but with complementarity structure.

For a hydraulic model including a pump connecting a node $i$ and a node $j$ the following model is used: If pump is off, no constraint on the head values $h_i$ and $h_j$ of nodes $i$ and $j$ is imposed; but if the pump is operating a constraint of the form

$$0 = h_i - h_j - \Delta h_{ij}(x) \qquad ; \text{Eq. 8,}$$

is imposed,

where $\Delta h_{ij}(x)$ is a model of the pump characteristics that depends on the flow through the pump and the pump rotation speed.

The conventional mixed-integer formulation of this is to use a binary variable $y_{\text{pu}} \in \{0,1\}$ that indicates if the pump is operating and enforce the implication

$$y_{\text{pu}} = 1 \quad \Rightarrow \quad 0 = h_i - h_j - \Delta h_{ij}(x) \qquad ; \text{Eq. 9,}$$

via big-M constraint:

$$0 \leq q_{\text{pu}} \leq y_{\text{pu}} q_{\text{pu}}^{\text{max}}, \qquad \left| h_i - h_j - \Delta h_{ij}(x) \right| \leq M(1 - y_{\text{pu}}) \quad ; \text{Eq. 10, 11}$$

Here

| | |
|---|---|
| $q_{\text{pu}}$ | denotes the flow through the pump and |
| $q_{\text{pu}}^{\text{max}}$ | the maximal possible flow and |
| $M$ | a sufficiently large number. |

Instead of this conventional mixed-integer formulation we use a continuous complementarity based formulation:

$$0 \leq q_{\mathrm{pu}} \leq q_{\mathrm{pu}}^{\max}, \quad s_{\mathrm{pu}}^{-} \leq h_i - h_j - \Delta h_{ij}(x) \leq s_{\mathrm{pu}}^{+}, \quad ; \text{Eq. 12, 13}$$

$$s_{\mathrm{pu}}^{+} q_{\mathrm{pu}} = s_{\mathrm{pu}}^{-} q_{\mathrm{pu}} = 0, \quad s_{pu}^{+}, s_{pu}^{-} \geq 0 \qquad ; \text{Eq. 14, 15}$$

The variables $s_{\mathrm{pu}}^{\pm}$ denote non-physical slack variables.

This reformulation allows a nonlinear programming formulation that involves continuous variables only and warm-start results from nonlinear programming can be used.

A particular efficient method is given by employing the Sequential Quadric Programming (SQP) method and storing primal and dual iterates, i.e. Lagrange multipliers, as well as the active set and then restarting the algorithm using these data as starting point.

Advantageously, the described method for controlling a water distribution network can determine the sequence of control variable values for each of the at least one actuator within a time span for determination, that is shorter as the time horizon.

This provides the option to calculate updated control variable values before the previously determined ones are outdated and/or yield infeasible operation due to an update of the forecast, which turns the method feasible for real time and real-world applications

Furthermore, this provides a time interval for measuring resulting dependent variables values of the water distribution network to be compared with determined dependent variable values. In case of significant deviations of the measured dependent variable values from the determined dependent variable values, a determination of an updated sequence of control variable values can be started.

According to an aspect, the start sequence of control variable values for each of the at least one actuator of the water distribution network is provided by respective values, which are determined during a prior operation of the water distribution network.

According to an aspect, the method further includes the following steps:
In a step, a nominal optimization run for the water distribution network is performed, for determining the start sequence of control variables values for each of the at least one actuator, wherein the nominal optimization run is based on the hydraulic model for describing the water distribution network and the nominal optimization run is based on a provided sequence of technical feasible optimization start values for the control variables for each of the at least one actuator.

Additionally, the nominal optimization run is based on the initial hydraulic head value of the at least one supply node and the nominal optimization run is based on a provided initial forecast of the sequence of nominal values of the water demand for the at least one demand node.

Nominal optimization of a water distribution network is done by solving an optimization problem with pump power set-points and valve positions as degrees of freedom and constraints given by the hydraulic model of the network and the requirement that tank levels match measurements at the initial point in time and that demand given by forecasts for each point in time and demand node can be satisfied as predicted by the hydraulic model. Formally this may have the following form Eq. 16:

$$\min_x f(x) \ \text{s.t.} \ g(x) = 0, \quad d_n^{\mathrm{opt}}(x, t) = d_n(t), \quad h_{\mathrm{ta}}^{\mathrm{opt}}(x, t_0) = h_{\mathrm{ta}}^{\mathrm{meas}}(t_0)$$

Using the equivalent variables as explained above this nominal problem can be solved by a person skilled in the art according to scientific literature.

According to an aspect, the sequence of technical feasible optimization start values are stored values, which are determined during a prior operation of the water distribution network and/or the sequence of technical feasible optimization start values are values, which are provided based on expert knowledge.

According to an aspect, the nominal optimization run for determining the start sequence of control variables values for each of the at least one actuator is further based on a sequence of dependent variables characterizing the water distribution network. Therefore, the sequence of dependent variables is provided by performing a simulation run for the water distribution network, which is based on the hydraulic model for describing the water distribution network and the initial hydraulic head value for each of at least one water supply node of the water distribution network, and a sequence of feasible control variables, which are provided by expert knowledge.

According to an aspect, the continuous optimization problem exclusively uses continuous control variables and continuous dependent variables, particularly for enabling a warm-starting procedure for the continuous optimization problem.

According to an aspect, the continuous optimization problem is provided by a reformulation of an optimization problem based on complementary constraints, wherein the continuous optimization problem is based on continuous variables, and wherein preferably a reformulation for starting and/or stopping of actuators of the water distribution network exclusively uses continuous variables.

According to an aspect, the continuous control problem is solved for determining the sequence of control variable values for each of the at least one actuator by applying a robust optimization method, wherein the robust optimization method is taking into account, when solving the continuous control problem, the respective demand uncertainty range for the at least one water demand node.

According to an aspect, the continuous control problem is solved for determining the sequence of control variable values for each of the at least one actuator by applying the robust optimization method, wherein the robust optimization method is taking into account, when solving the continuous control problem, an uncertainty range for the initial hydraulic head value.

According to an aspect, the continuous optimization problem includes the objective and a characterization of the hydrodynamic model in terms of control variables and dependent variables of the water distribution network. Additionally the continuous optimization problem includes a relation that maps the forecast of the water demand with respect to time to the respective dependent variables, and a relation that maps the initial hydrodynamic head of the respective supply node to the respective dependent variables.

According to an aspect, the method further includes the following steps.

In a step, an updated forecast of the sequence of nominal values of the water demand for the at least one water demand node within an updated time horizon is provided.

In a further step, an updated associated uncertainty range for each updated forecasted nominal value of the water demand is provided.

In a further step, a measured updated initial hydraulic head value of the at least one water supply nodes is provided.

In a further step, a sequence of dependent variables values of the water distribution network is determined, wherein the sequence of dependent variables values is based on the determined sequence of control variable values for each of the at least one actuator.

In a preferred step, at least one actual dependent variable value of the water distribution network is measured.

In a further step, the updated forecast of the sequence of nominal values of the water demand for the at least one water demand node within at least parts of the updated time horizon is compared with a preceding forecast of the sequence of nominal values of the water demand for the at least one water demand node within the respective parts of the time horizon. Alternatively or additionally, in a step of the method the updated associated uncertainty range for each nominal value of the water demand is compared with a preceding associated uncertainty range for each nominal value of the water demand. Alternatively or additionally, in a preferred step of the method the at least one measured dependent variable value of the water distribution network is compared with the respective part of the determined sequence of the dependent variables of the water distribution network. In a further step, a run for a determination of an updated sequence of control variable values for each of the at least one actuator for controlling the water distribution network is triggered, if a respective difference value of the respective comparison is above a respective threshold value for the respective comparison, based on the optimized control variable values of a preceding determination run for determining the sequence of control variable values.

Thereby, the determination of an updated sequence of control variable values is based on the continuous optimization problem for controlling the water distribution network with respect to the objective, and thereby the values of the control variables are optimized under consideration of the updated demand uncertainty range for each of the at least one water demand node. Additionally, the sequence of the values of the control variables are optimized by taking into account the updated forecast of the sequence of nominal values of the water demand for the at least one water demand node within the time horizon, and by taking into account the updated initial hydraulic head value of the at least one water supply node.

The significant changes can be determined based on a predefined threshold and can be different for each demand node and each tank.

Given a demand node n and a threshold $\square\,\tau_n > 0$ for this node n, a significant change in demand forecast for this node can be given if

$$|d_n(t) - d'_n(t)| \geq \tau_n \qquad \text{;Eq. 17}$$

holds, where $d_n(t)$ is the current demand forecast for this node for the current time and $d_n'(t)$ denotes the previous demand forecast for this node at the current time.

$d_n(t)$ and $d_n'(t)$ are specified as flows and e.g. expressed in SI units in $\frac{\text{m}^3}{\text{s}}$.

Similar given a tank ta and a threshold $\tau_{\mathrm{ta}} > 0$ for this node, a significant deviation in tank level is given if

$$\left| h_{\mathrm{ta}}^{\mathrm{meas}}(t) - h_{\mathrm{ta}}^{\mathrm{opt}}(t) \right| \geq \tau_{\mathrm{ta}} \quad ;\text{Eq. 17,}$$

holds.

Here $h_{\mathrm{ta}}^{\mathrm{meas}}(t)$ denotes the current measurement of the tank level at the current time and $h_{\mathrm{ta}}^{\mathrm{opt}}(t)$ denotes the simulation forecast for the tank level at the current time based on the last optimization execution using the hydraulic model of the network. The tank level is given as hydraulic head and e.g. expressed in SI units in m.

According to an aspect, the uncertainty range for each nominal value of the water demand of the at least one demand node is respectively characterized by a certain probability distribution around to the nominal value of the water demand.

According to an aspect, the objective for the optimized controlling of the water distribution network comprises consumed energy of the water distribution network, and/or energy costs of the water distribution network, and/or a maximum pressure within the water distribution network; and/or a number of starts and/or stops of the at least one actuator of the water distribution network.

According to an aspect, a control device for controlling a water distribution network is proposed, including an input port, which is configured for providing a hydraulic model for characterizing the water distribution network. Additionally, the input port is configured for providing a sequence of control variable values for each of the at least one actuator of the water distribution network. Additionally, the input port is configured for providing a corresponding initial hydraulic head value of at least one water supply node of the water distribution network. Additionally, the input port is configured for providing an objective for optimized controlling of the water distribution network. Additionally, the input port is configured for providing a forecast of a sequence of nominal values of a water demand for at least one water demand node within a time period. Additionally, the input port is configured for providing a corresponding uncertainty range for each nominal value of the water demand. The control device includes a control unit, which is coupled to the input port and the control unit is configured to be coupled to each of the at least one actuator of the water distribution network, preferably to provide the determined sequence of control variable values to the at least one actuator for controlling the water distribution network within the time horizon. Additionally, the control unit is configured to perform any one of the methods for controlling the water distribution network as described above.

According to an aspect, the control device includes an input port, which is configured for providing measurement values of an actual sequence of the dependent variables of the water distribution network.

According to an aspect, the control device includes an optimizer unit including a solver module, which is configured to perform a repetitive robust optimization procedure of the continuous optimization problem as described above.

According to an aspect, the control device is configured to perform any one of the methods to control a water distribution network as described above based on a Field Programmable Gate Array (FPGA).

A use any one of the method as described above is proposed, for safety controlling a water distribution network by providing a determined sequence of control variable values to respective actuators of the at least one actuator of the water distribution network.

A use of a method to verify a determined sequence of control variable values for controlling a water distribution network, based on a continuous optimization problem as described above is proposed, wherein a verification sequence of nominal values of a water demand for each of the at least one water demand node within a time horizon is provided.

Alternatively or additionally, wherein a modification of an initial hydraulic head value for each of at least one water supply node is provided.

Additionally, dependent variable values resulting from the respective modification are determined, for comparison with boundary values for the respective dependent variables, preferably for providing sensitivity information of corresponding sequences of dependent variable values in respect to verification sequence of nominal values of a water demand for each of the at least one water demand node and/or in respect to a variation of the initial hydraulic head value for each of at least one water supply node, the sensitivity information characterizing a status of the water distribution network.

Further preferably, the resulting dependent variable values are determined to enable a what-if analysis for an operator of the water distribution network.

The result *x* of the robust optimization problem can be used for a what-if analysis. The simulation and head and flow forecasting with the hydraulic model can be given by the set of equations:

$$g(x) = 0, \qquad d_n^{\mathrm{ro}}(x, t) = d_n(t), \qquad h_{\mathrm{ta}}^{\mathrm{ro}}(x, t_0) = h_{\mathrm{ta}}^{\mathrm{meas}}(t_0) \quad ;\text{Eq. 18,}$$

and by defining, Eq. 19

$$G(x,u) := (g(x), \quad d_n^{\mathrm{ro}} - d_n(t) - u_n(t), \quad h_{\mathrm{ta}}^{\mathrm{ro}}(x,t_0) - h_{\mathrm{ta}}^{\mathrm{meas}}(t_0) - u_{\mathrm{ta}}),$$

the hydraulic model without a respective uncertainty range is given by $G(x, 0) = 0$. If $x_0$ is a solution to the optimization problem with $G(x, u_0) = 0$ for some uncertainty vector $u_0 \in U$, a solution of a different uncertainty realization $u_0 + \delta u$ can be expressed by the implicit function theorem approximatively as:

$$x(u_0, \delta u) = x_0 - \partial_x G(x_0, u_0)^{-1} \partial_u G(x_0, u_0) \delta u. \quad \text{Eq. 20}$$

Wherein $\partial_x$ and $\partial_u$ are the differential with respect to x and u, and $\delta u$ a disturbance.

Using this expansion it is possible to obtain confidence intervals of the head and flow trajectories of all network elements if the disturbances $\delta u$ are varied in confidence intervals. These confidence intervals can be displayed to an operator and can increase the trust into an optimization solution as showcased in the following figure.

According to another aspect a computer program is disclosed comprising instructions, which, when the program is executed by a computer, cause the computer to carry out any of the described methods above.

Such a computer program enables the use of the described method in different systems.

According to another aspect of the present invention a computer-readable storage medium is disclosed on which the computer program is stored.

Brief description of the drawings

The accompanying drawings, which are included to provide a further understanding of the invention and are incorporated in and constitute a part of this application, illustrate embodiments of the invention and together with the description serve to explain the principle of the invention. The drawings display:

FIG. 1      a water distribution network;
FIG. 2      a diagram with a timely sequence of hydraulic head values;
FIG. 3      a flow diagram of a method for controlling a water distribution network; and
FIG. 4      a flow diagram of a method to verify a determined sequence of control variable values.

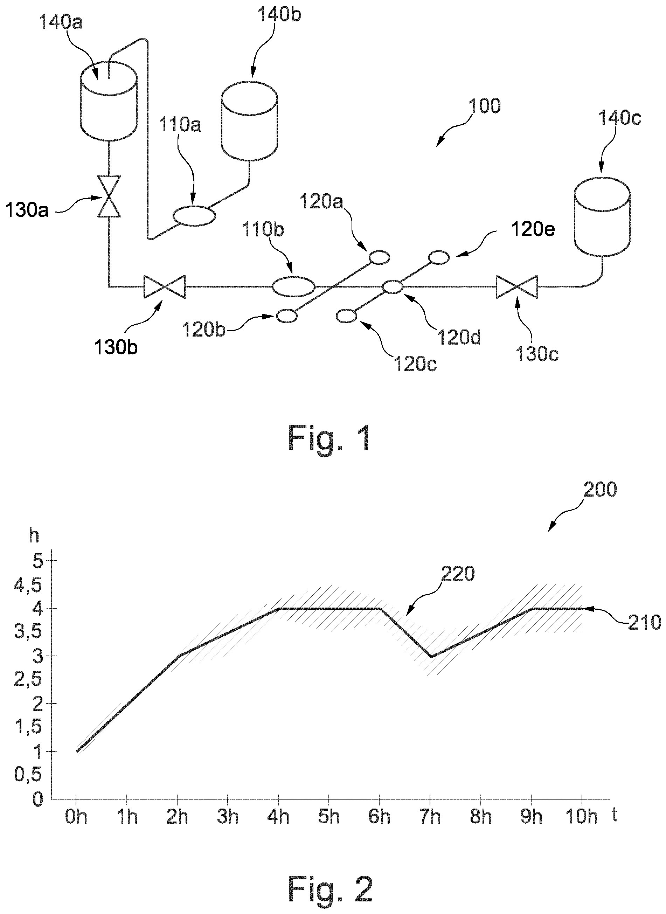

Figure 1 sketches schematically a water distribution network 100. The water distribution network 100 comprises water supply nodes 140a, 140b and 140c, as well as actuators like valves 130a, 130b, 130c and pumps 110a and 110b. Water demand nodes are indicated by 120a, 120b, 120c, 120d and 120e. The mentioned elements of the water distribution network are linked as indicated in figure 1, preferably using tubes. Alternatively, the water distribution network can be structured using links and nodes, wherein the links include actuators, like pumps and valves, and tubes and the nodes include demand and supply nodes.

Figure 2 sketches a diagram 200 with a timely sequence of a nominal hydraulic head values h 210 for a water supply node 140a, 140b, 140c of the water distribution network 100, which are drawn in respect to time t and confidence intervals 220 of the hydraulic head values h resulting from uncertainty ranges of the water demand for a water demand node 120a, 120b, 120c, 120d, 120e and/or from uncertainty ranges of a measured initial values of the hydraulic head in any of the water supply nodes, which are drawn in respect to time t.

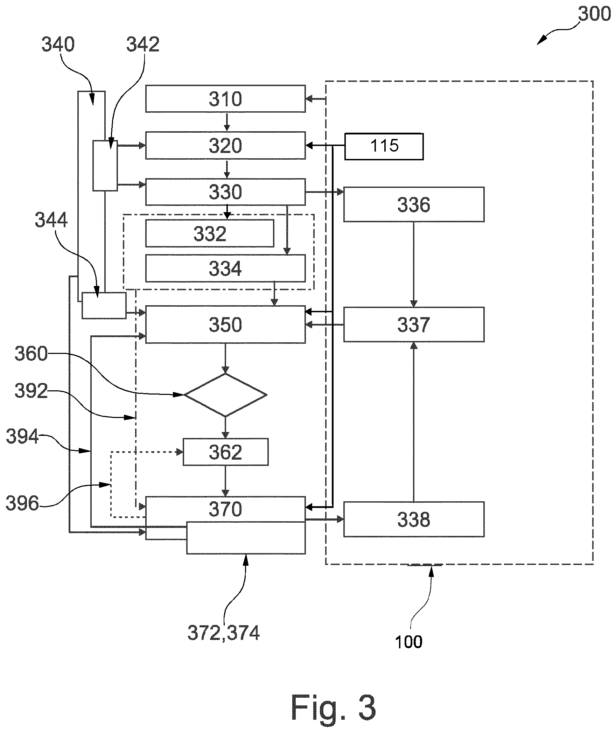

Figure 3 sketches a flow diagram 300 of a method for controlling a water distribution network 100.

In step 310, a hydraulic model for describing the water distribution network 100 is provided.

In step 320, a simulation run for determining a sequence of dependent variables characterizing the water distribution network 100 is performed, which is based as well on the hydraulic model for describing the water distribution network 100 as on an initial hydraulic head value 115 for each of at least one water supply node 140a, 140b, 140c of the water distribution network 100. Additionally, the simulation run is based on a sequence of technical feasible control variables for the control variables for each of the at least one actuator 110a, 110b, 130a, 130b, 130c, which can be provided by expert knowledge.

In step 330, a nominal optimization run for the water distribution network 100 is performed, for determining a start sequence 332 of control variable values for each of the at least one actuator 110a, 110b, 130a, 130b, 130c, preferably the start sequence 332 is used for starting the robust optimisation in step 370.

The nominal optimization run 320 is based as well on the hydraulic model for describing the water distribution network 100 as based on a provided sequence of technical feasible optimization start values for the control variables for each of the at least one actuator 110a, 110b, 130a, 130b, 130c.

Additionally, the nominal optimization run is based as well on an initial hydraulic head value 115 of the at least one water supply node 140a, 140b, 140c as based on a provided initial forecast 342 of a sequence of nominal values of the water demand for the at least one water demand node 120a, 120b, 120c, 120d, 120e. Preferably, the nominal optimization run is further based on a sequence of dependent variables characterizing the water distribution network, which are provided by performing the simulation run 320 for the water distribution network.

The start sequence 332 of control variables values for each of the at least one actuator 110a, 110b, 130a, 130b, 130c can optionally be provided to the water distribution network 100 as initial control variable values 336 for starting the control of the water distribution network 100 and the related dependent variables 337 of the water distribution network 100 can be determined by measurement. Additionally, by performing the nominal optimization run 330 a sequence of dependent variables characterizing the water distribution network 100 can be determined.

In step 350, a sequence or an updated sequence of dependent variables values 334, 374 of the water distribution network 100 is respectively provided or determined, wherein the sequence of dependent variables values is based on the determined sequence of control variable values 372 and/or control variable values 332 for each of the at least one actuator 110a, 110b, 130a, 130b, 130c and an updated value 337 of at least one dependent variable value of the water distribution network 100 is provided by measurements at the water distribution network 100.

Additionally or alternatively in step 350, in a first comparison a provided updated forecast 344 of the sequence of nominal values of the water demand for the at least one water demand node 120a, 120b, 120c, 120d, 120e within the time horizon is compared with a stored preceding forecast 342, 344 of the sequence of nominal values of the water demand for the at least one water demand node 120a, 120b, 120c, 120d, 120e within an updated time horizon.

Alternatively or additionally in step 350, in a second comparison a provided updated associated uncertainty range for each nominal value of the water demand is compared with a stored preceding associated uncertainty range for each nominal value of the water demand.

Additionally or alternatively, in step 350, in a third comparison the updated measured value of at least one dependent variable 337 of the water distribution network is compared with the respective value of the determined sequence of the dependent variables 374 and/or 334 of the water distribution network 100.

In step 360, a significance of the result of the different comparison steps mentioned above is determined by determining whether a respective difference value of the respective comparison mentioned above is above a respective threshold value for the respective comparison, based on the optimized control variable values of a preceding determination-run 332, 372 for determining the sequence of control variable values.

In step 362, a determination 370 of a updated sequence of control variable values 372 is triggered.

In step 370, an updated sequence of control variable values 372 for each of the at least one actuator 110a, 110b, 130a, 130b, 130c for controlling the water distribution network 100 is determined, based on a continuous optimization problem for controlling the water distribution network 100 with respect to a provided objective, wherein a solver module for the continuous optimization problem, which is preferably respectively configured for robust optimization, is configured for being started based on the measured updated initial hydraulic head value 115 for each of the at least one water supply node 140a, 140b, 140c.

Alternatively or additionally the determination of the updated sequence of control variable values 372 is based on a provided start sequence of control variable values 332, and is based on a provided updated forecast 340, 344.

The values of the control variables 372 are determined by an optimization under consideration of the provided water demand uncertainty range for each at least one water demand node 120a, 120b, 120c, 120d, 120e. The determined updated sequence of control variable values 372 can be provided 338 to the at least one actuator 110a, 110b, 130a, 130b, 130c for controlling the water distribution network 100 within the updated time horizon.

The determination of an updated sequence of control variable values 372 for each of the at least one actuator 110a, 110b, 130a, 130b, 130c of step 370 can be triggered periodically 396 using a current sequence of control variable values 372 as start values and a measured updated initial hydraulic head value 115 for each of the at least one water supply node 140a, 140b, 140c.

Additionally or alternatively, the determination can be performed based on, feed forward 392, the determined start sequence of control variable values 332 for each of the at least one actuator 110a, 110b, 130a, 130b, 130c of step 350 providing with feedback 394 of a current sequence of control variable values 372 for each of the at least one actuator 110a, 110b, 130a, 130b, 130c and/or a current sequence of dependent variable values 374 for the comparison of step 350.

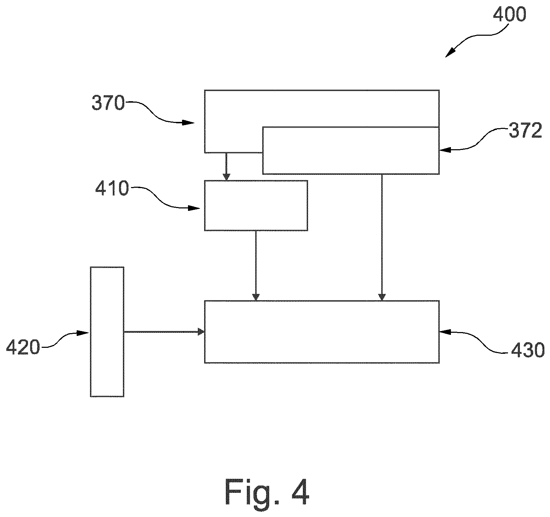

Figure 4 sketches schematically a method 400 for verification a determined sequence of control variable values 372 for controlling a water distribution network 100, wherein the determination of the sequence of control variable values 372 is based on a robust continuous optimization problem 370, particularly based on a set of constraints 410 as described above by equation 19, wherein a verification sequence of nominal values of a water demand for each of the at least one water demand node 120a, 120b, 120c, 120d, 120e within a time horizon is provided, preferably by an operator.

Dependent variable values 374 for verification, which are characterizing the water distribution network 100 taking into account the verification sequence of the nominal values of the water demand for each of the at least one water demand node 120a, 120b, 120c, 120d, 120e, can be determined based on a current sequence of control variable values 372 and based on the verification sequence of the nominal values of the water demand for each of the at least one water demand node 120a, 120b, 120c, 120d, 120e as described above, preferably based on equation 20. The corresponding dependent variable values 374 for verification can be compared with boundary values and/or limit values for the respective dependent variables 374, preferably for providing sensitivity information in respect to a variation of the modified forecast 420 of the sequence of nominal values of a water demand for each of the at least one water demand node 120a - e within a time horizon.

The resulting changes of the corresponding sequences of dependent variable values, which are characterizing a status of the water distribution network 100, can be determined if the water demand value changes. Further preferably, the verification of a determined sequence of control variable values 372 using the verification method can enable a what-if analysis 430 for an operator of the water distribution network 100. Particularly, the verification sequence of the nominal values of the water demand for each of the at least one water demand node 120a, 120b, 120c, 120d, 120e can be the forecast of the nominal values or a modification of the forecast of the nominal values of the water demand.

Advantageously, using the method 400 for verification of a determined sequence of control variable values 372 can visualize 430 confidence intervals for the dependency variables, which means a visualize how certain deviations from the nominal forecast for the values of the water demand affect the dependency variables.

## Claims

1.  A method (300) for controlling a water distribution network (100), comprising:

    providing a hydraulic model for characterizing the water distribution network (100);
    providing a start sequence of control variable values for each of at least one actuator (110a, 110b, 130a, 130b, 130c) of the water distribution network (100); and
    providing an initial hydraulic head value (115) for each of at least one water supply node (140a, 140b, 140c) of the water distribution network (100);
    providing an objective for optimized controlling the water distribution network (100);
    providing a forecast (340) of a sequence of nominal values of a water demand for each at least one water demand node (120a, 120b, 120c, 120d, 120e) of the water distribution network (100) within a time horizon; and
    providing an associated uncertainty range for each nominal value of the water demand;
    determining a sequence of control variable values for each of the at least one actuator (110a, 110b, 130a, 130b, 130c) for controlling the water distribution network (100) based on a continuous optimization problem for controlling the water distribution network (100) with respect to the objective, wherein the continuous optimization problem exclusively uses continuous control variables and continuous dependent variables [cl.4], and wherein a solver module for the continuous optimization problem is configured for being started based on the provided initial hydraulic head value for each of the at least one water supply node (140a, 140b, 140c) and/or based on the provided start sequence of control variable values; and based on the provided forecast; and
    wherein the values of the control variables are optimized under consideration of the provided water demand uncertainty range for each at least one water demand node (120a, 120b, 120c, 120d, 120e); and
    wherein the sequence of control variable values (372) are determined to be provided to the at least one actuator (110a, 110b, 130a, 130b, 130c) for controlling the water distribution network (100) within the time horizon.

2.  The method according to claim 1, wherein the start sequence of control variable values for each of the at least one actuator of the water distribution network (100) is provided by respective values, which are determined during a prior operation of the water distribution network (100).

3.  The method according to claim 1, further comprising:
    performing a nominal optimization run (330) for the water distribution network (100), for determining the start sequence of control variables values for each of the at least one actuator (110a, 110b, 130a, 130b, 130c); wherein the nominal optimization run:

    is based on the hydraulic model for describing the water distribution network (100);
    is based on a provided sequence of technical feasible optimization start values for the control variables for each of the at least one actuator; and
    is based on the initial hydraulic head value of the at least one water supply node; and
    is based on a provided initial forecast of the sequence of nominal values of the water demand (342) for the at least one water demand node (120a, 120b, 120c, 120d, 120e).

4.  The method according to any one of the preceding claims, wherein the continuous optimization problem exclusively uses the continuous control variables and the continuous dependent variables, for enabling a warm-starting procedure for the continuous optimization problem.

5. The method according to any one of the preceding claims, wherein the continuous optimization problem is provided by a reformulation of an optimization problem based on complementary constraints, wherein the continuous optimization problem is based on continuous variables; and wherein preferably a reformulation for starting and/or stopping of actuators (110a, 110b, 130a, 130b, 130c) of the water distribution network (100) exclusively uses continuous variables.

6. The method according to any one of the preceding claims, wherein the continuous control problem is solved for determining the sequence of control variable values for each of the at least one actuator (110a, 110b, 130a, 130b, 130c) by applying a robust optimization method, wherein the robust optimization method is taking into account, when solving the continuous control problem, the respective demand uncertainty range for the at least one water demand node (120a, 120b, 120c, 120d, 120e).

7. The method according to any one of the preceding claims, wherein the continuous control problem is solved for determining the sequence of control variable values for each of the at least one actuator (110a, 110b, 130a, 130b, 130c) by applying the robust optimization method, wherein the robust optimization method is taking into account, when solving the continuous control problem, an uncertainty range for the initial hydraulic head value.

8. The method according to any one of the preceding claims, wherein the continuous optimization problem comprises:

> the objective; and
> a characterization of the hydrodynamic model in terms of control variables and dependent variables of the water distribution network (100); and
> a relation that maps the forecast of the water demand (340) with respect to time to the respective dependent variables; and
> a relation that maps the initial hydrodynamic head of the respective supply node (140a, 140b, 140c) to the respective dependent variables.

9. The method according to any of the preceding claims, further comprising the steps of:

> providing an updated forecast of the sequence of nominal values of the water demand for the at least one water demand node (120a, 120b, 120c, 120d, 120e) within an updated time horizon;
> providing an updated associated uncertainty range for each updated forecasted nominal value of the water demand;
> providing a measured updated initial hydraulic head value of the at least one water supply nodes (140a, 140b, 140c);
> determining a sequence of dependent variables values of the water distribution network (100), wherein the sequence of dependent variables values is based on the determined sequence of control variable values for each of the at least one actuator;
> preferably, measuring at least one actual dependent variable value of the water distribution network (100); and
> comparing the updated forecast of the sequence of nominal values of the water demand (340, 344) for the at least one water demand node within at least parts of the updated time horizon with a preceding forecast (340) of the sequence of nominal values of the water demand for the at least one water demand node (120a, 120b, 120c, 120d, 120e) within the respective parts of the time horizon; and/or
> comparing the updated associated uncertainty range for each nominal value of the water demand with a preceding associated uncertainty range for each nominal value of the water demand; and/or
> preferably, comparing the at least one measured dependent variable value of the water distribution network (100) with the respective part of the determined sequence of the dependent variables of the water distribution network (100); and
> triggering and run (362) a determination (370) of an updated sequence of control variable values (372) for each of the at least one actuator (110a, 110b, 130a, 130b, 130c) for controlling the water distribution network (100), if a respective difference value of the respective comparison is above a respective threshold value for the respective comparison, based on the optimized control variable values of a preceding determination run for determining the sequence of control variable values (372); and
> wherein the determination of an updated sequence of control variable values is based on the continuous optimization problem for controlling the water distribution network (100) with respect to the objective; and
> wherein the values of the control variables (372) are optimized under consideration of the updated demand uncertainty range for each of the at least one water demand node (120a, 120b, 120c, 120d, 120e); and
> wherein the sequence of the values of the control variables (372) are optimized by taking into account the updated forecast (344) of the sequence of nominal values of the water demand for the at least one water demand node (120a, 120b, 120c, 120d, 120e) within the time horizon, and by taking into account the updated initial hydraulic head value of the at least one water supply node (140a, 140b, 140c).

10. The method according to any of the preceding claims, wherein the objective for the optimized controlling of the water distribution network (100) comprises consumed energy of the water distribution network (100); and/or energy costs of the water distribution network (100); and/or a maximum pressure within the water distribution network (100); and/or a number of starts and/or stops of the at least one actuator of the water distribution network (100).

11. A control device for controlling a water distribution network (100), comprising an input port, which is configured:

- for providing a hydraulic model for characterizing the water distribution network (100);
- for providing a sequence of control variable values (372) for each of the at least one actuator (110a, 110b, 130a, 130b, 130c) of the water distribution network (100); and
- for providing a corresponding initial hydraulic head value of at least one water supply node (140a, 140b, 140c) of the water distribution network (100);
- for providing an objective for optimized controlling of the water distribution network (100);
- for providing a forecast (370) of a sequence of nominal values of a water demand for at least one water demand node (120a, 120b, 120c, 120d, 120e) within a time period; and
- for providing a corresponding uncertainty range for each nominal value of the water demand; and

a control unit, which is coupled to the input port; and wherein the control unit is configured to be coupled to each of the at least one actuator (110a, 110b, 130a, 130b, 130c) of the water distribution network (100); and wherein the control unit is configured to perform a method for controlling the water distribution network (100) as described by claim 1 to 10.

12. The control device according to claim 11, comprising an input port, which is configured

- for providing measurement values of an actual sequence of the dependent variables of the water distribution network (100).

13. Use of the method according to any of claims 1 to 10 for safety controlling a water distribution network (100) by providing a determined sequence of control variable values to respective actuators of the at least one actuator (110a, 110b, 130a, 130b, 130c) of the water distribution network (100).

14. Use of a method to verify a determined sequence of control variable values (372) for controlling a water distribution network (100), based on a continuous optimization problem according to any one of claim 1 to 10, wherein

a verification sequence of nominal values of a water demand for each at least one water demand node within a time horizon is provided; and/or wherein
a modification of an initial hydraulic head value for each of at least one water supply node is provided; and resulting dependent variable values are determined for comparison with boundary values for the respective dependent variables, preferably for providing sensitivity information of corresponding sequences of dependent variable values in respect to the verification sequence of nominal values of a water demand for each of the at least one water demand node 120a, 120b, 120c, 120d, 120e; and/or in respect to a variation of the initial hydraulic head value for each of at least one water supply node (140a, 140b, 140c), the sensitivity information characterizing a status of the water distribution network (100), and further preferably to enable a what-if analysis for an operator of the water distribution network (100).

15. A computer program comprising instructions, which, when the program is executed by a computer, cause the computer to carry out a method according to claims 1 to 10.

**Patentansprüche**

1. Verfahren (300) zur Steuerung eines Wasserverteilungsnetzes (100), umfassend:

Bereitstellen eines hydraulischen Modells zur Charakterisierung des Wasserverteilungsnetzes (100);

Bereitstellen einer Startsequenz von Steuerungsvariablenwerten für jeden von mindestens einem Aktuator (110a, 110b, 130a, 130b, 130c) des Wasserverteilungsnetzes (100); und

Bereitstellen eines anfänglichen hydraulischen Druckwerts (115) für jeden von mindestens einem Wasserversorgungsknoten (140a, 140b, 140c) des Wasserverteilungsnetzes (100);

Bereitstellen einer Zielvorgabe für die optimierte Steuerung des Wasserverteilungsnetzes (100);

Bereitstellen einer Prognose (340) für eine Folge von Nennwerten eines Wasserbedarfs für jeden mindestens einen Wasserbedarfsknoten (120a, 120b, 120c, 120d, 120e) des Wasserverteilungsnetzes (100) innerhalb eines Zeithorizonts; und

Bereitstellen eines zugehörigen Unsicherheitsbereichs für jeden Nennwert des Wasserbedarfs;

Bestimmen einer Folge von Stellgrößenwerten für jeden der mindestens einen Aktuator (110a, 110b, 130a, 130c) zum Steuern des Wasserverteilungsnetzes (100) auf der Grundlage eines kontinuierlichen Optimierungsproblems zum Steuern des Wasserverteilungsnetzes (100) in Bezug auf das die Zielvorgabe,

wobei das kontinuierliche Optimierungsproblem ausschließlich kontinuierliche Regelgrößen und kontinuierliche abhängige Größen verwendet und

wobei ein Lösungsmodul für das kontinuierliche Optimierungsproblem so konfiguriert ist, dass es auf der Grundlage des bereitgestellten anfänglichen hydraulischen Druckwerts für jeden der mindestens einen Wasserversorgungsknoten (140a, 140b, 140c) und/oder auf der Grundlage der bereitgestellten Startsequenz von Regelgrößenwerten gestartet wird; und auf der Grundlage der bereitgestellten Prognose; und

wobei die Werte der Regelgrößen unter Berücksichtigung des bereitgestellten Unsicherheitsbereichs des Wasserbedarfs für jeden mindestens einen Wasserbedarfsknoten (120a, 120b, 120c, 120d, 120e) optimiert werden;

und

wobei die Folge von Stellgrößenwerten (372) bestimmt wird, die dem mindestens einen Aktuator (110a, 110b, 130a, 130b, 130c) zur Steuerung des Wasserverteilungsnetzes (100) innerhalb des Zeithorizonts bereitgestellt werden.

2. Verfahren nach Anspruch 1, wobei die Startsequenz der Regelgrößenwerte für jeden der mindestens einen Aktuatoren des Wasserverteilungsnetzes (100) durch jeweilige Werte bereitgestellt wird, die während eines vorherigen Betriebs des Wasserverteilungsnetzes (100) bestimmt wurden.

3. Verfahren nach Anspruch 1, das ferner umfasst:
Durchführen eines nominalen Optimierungslaufs (330) für das Wasserverteilungsnetz (100), um die Startsequenz von Stellgrößenwerten für jeden der mindestens einen Aktuator (110a, 110b, 130a, 130b, 130c) zu bestimmen;

wobei der nominale Optimierungslauf auf dem hydraulischen Modell zur Beschreibung des Wasserverteilungsnetzes (100) basiert;

auf einer bereitgestellten Folge von technisch realisierbaren Optimierungsstartwerten für die Steuerungsvariablen für jeden der mindestens einen Aktuator basiert; und

auf dem anfänglichen hydraulischen Druckwert des mindestens einen Wasserversorgungsknoten basiert; und

auf einer vorgegebenen Anfangsprognose der Folge von Sollwerten des Wasserbedarfs (342) für den mindestens einen Wasserbedarfsknoten (120a, 120b, 120c, 120d, 120e) basiert.

4. Verfahren nach einem der vorstehenden Ansprüche, wobei das kontinuierliche Optimierungsproblem ausschließlich die kontinuierlichen Regelgrößen und die kontinuierlichen abhängigen Variablen verwendet, um ein Warmstartverfahren für das kontinuierliche Optimierungsproblem zu ermöglichen.

5. Verfahren nach einem der vorstehenden Ansprüche, wobei das kontinuierliche Optimierungsproblem durch eine Umformulierung eines Optimierungsproblems auf Basis komplementärer Nebenbedingungen bereitgestellt wird,

wobei das kontinuierliche Optimierungsproblem auf kontinuierlichen Variablen basiert; und

wobei vorzugsweise eine Umformulierung zum Starten und/oder Stoppen von Aktuatoren (110a, 110b, 130a, 130b, 130c) des Wasserverteilungsnetzes (100) ausschließlich kontinuierliche Variablen verwendet.

6. Verfahren nach einem der vorstehenden Ansprüche, wobei das kontinuierliche Regelungsproblem gelöst wird, um die Folge von Regelgrößenwerten für jeden der mindestens einen Aktuator (110a, 110b, 130a, 130b, 130c) durch Anwendung eines robusten Optimierungsverfahrens gelöst wird, wobei das robuste Optimierungsverfahren bei der Lösung des kontinuierlichen Regelungsproblems den jeweiligen Bedarfsunsicherheitsbereich für den mindestens einen Wasserbedarfsknoten (120a, 120b, 120c, 120d, 120e) berücksichtigt.

7. Verfahren nach einem der vorstehenden Ansprüche, wobei das kontinuierliche Regelungsproblem zur Bestimmung der Folge von Regelgrößenwerten für jeden der mindestens einen Aktuator (110a, 110b, 130a, 130b, 130c) durch Anwendung des robusten Optimierungsverfahrens gelöst wird, wobei das robuste Optimierungsverfahren bei der Lösung des kontinuierlichen Regelungsproblems einen Unsicherheitsbereich für den anfänglichen hydraulischen Druckwert berücksichtigt.

8. Verfahren nach einem der vorstehenden Ansprüche, wobei das kontinuierliche Optimierungsproblem umfasst:

   die Zielvorgabe; und
   eine Charakterisierung des hydrodynamischen Modells in Bezug auf Regelgrößen und abhängige Größen des Wasserverteilungsnetzes (100); und
   eine Beziehung, die die Prognose des Wasserbedarfs (340) in Bezug auf die Zeit auf die jeweiligen abhängigen Variablen abbildet; und
   eine Beziehung, die den anfänglichen hydrodynamischen Druck des jeweiligen Versorgungsknotens (140a, 140b, 140c) auf die jeweiligen abhängigen Variablen abbildet.

9. Verfahren nach einem der vorstehenden Ansprüche, das ferner die folgenden Schritte umfasst:

   Bereitstellen einer aktualisierten Prognose der Folge von Nennwerten des Wasserbedarfs für den mindestens einen Wasserbedarfsknoten (120a, 120b, 120c, 120d, 120e) innerhalb eines aktualisierten Zeithorizonts;
   Bereitstellen eines aktualisierten zugehörigen Unsicherheitsbereichs für jeden aktualisierten prognostizierten Nennwert des Wasserbedarfs;
   Bereitstellen eines gemessenen aktualisierten anfänglichen hydraulischen Druckwerts des mindestens einen Wasserversorgungsknotens (140a, 140b, 140c);
   Bestimmen einer Folge von abhängigen Variablenwerten des Wasserverteilungsnetzes (100), wobei die Folge von abhängigen Variablenwerten auf der bestimmten Folge von Stellgrößenwerten für jeden der mindestens einen Aktuator basiert; vorzugsweise Messen mindestens eines tatsächlichen abhängigen Variablenwertes des Wasserverteilungsnetzes (100); und
   Vergleichen der aktualisierten Vorhersage der Folge von Nennwerten des Wasserbedarfs (340, 344) für den mindestens einen Wasserbedarfsknoten innerhalb mindestens von Teilen des aktualisierten Zeithorizonts mit einer vorhergehenden Vorhersage (340) der Folge von Nennwerten des Wasserbedarfs für den mindestens einen Wasserbedarfsknoten (120a, 120b, 120c, 120d, 120e) innerhalb der jeweiligen Teile des Zeitraums; und/oder
   Vergleichen des aktualisierten zugehörigen Unsicherheitsbereichs für jeden Nennwert des Wasserbedarfs mit einem vorhergehenden zugehörigen Unsicherheitsbereich für jeden Nennwert des Wasserbedarfs; und/oder vorzugsweise Vergleichen des mindestens einen gemessenen abhängigen Variablenwerts des Wasserverteilungsnetzes (100) mit dem jeweiligen Teil der bestimmten Folge der abhängigen Variablen des Wasserverteilungsnetzes (100); und
   Initiieren und Ausführen (362) einer Bestimmung (370) einer aktualisierten Folge von Stellgrößenwerten (372) für jeden der mindestens einen Aktuatoren (110a, 110b, 130a, 130b, 130c) zur Steuerung des Wasserverteilungsnetzes (100) , wenn ein jeweiliger Differenzwert des jeweiligen Vergleichs oberhalb eines jeweiligen Schwellenwerts für den jeweiligen Vergleich liegt, basierend auf den optimierten Stellgrößenwerten eines vorhergehenden Bestimmungslaufs zur Bestimmung der Folge von Stellgrößenwerten (372); und
   wobei die Bestimmung einer aktualisierten Folge von Stellgrößenwerten auf dem kontinuierlichen Optimierungsproblem zur Steuerung des Wasserverteilungsnetzes (100) in Bezug auf die Zielvorgabe basiert; und
   wobei die Werte der Stellgrößen (372) unter Berücksichtigung des aktualisierten Bedarfsunsicherheitsbereichs für jeden der mindestens einen Wasserbedarfsknoten (120a, 120b, 120c, 120d, 120e) optimiert werden; und
   wobei die Folge der Werte der Regelgrößen (372) unter Berücksichtigung der aktualisierten Prognose (344) der Folge der Sollwerte des Wasserbedarfs für den mindestens einen Wasserbedarfsknoten (120a, 120b, 120c, 120d, 120e) innerhalb des Zeithorizonts und unter Berücksichtigung des aktualisierten anfänglichen hydraulischen Druckwerts des mindestens einen Wasserversorgungsknotens (140a, 140b, 140c) optimiert wird.

10. Verfahren nach einem der vorstehenden Ansprüche, wobei die Zielvorgabe für die optimierte Steuerung des Wasserverteilungsnetzes (100) den Energieverbrauch des Wasserverteilungsnetzes (100) und/oder die Energiekosten des Wasserverteilungsnetzes (100) und/oder einen maximalen Druck innerhalb des Wasserverteilungsnetzes (100) umfasst. und/oder eine Anzahl von Starts und/oder Stopps des mindestens einen Aktuators des Wasserverteilungsnetzes (100).

11. Ein Steuergerät zur Steuerung eines Wasserverteilungsnetzes (100), umfassend einen Eingangsport, der konfiguriert ist:

- zur Bereitstellung eines hydraulischen Modells zur Charakterisierung des Wasserverteilungsnetzes (100);
- zum Bereitstellen einer Folge von Stellgrößenwerten (372) für jeden der mindestens einen Aktuator (110a, 110b, 130a, 130b, 130c) des Wasserverteilungsnetzes (100); und
- Bereitstellen eines entsprechenden hydraulischen Anfangsdruckwerts mindestens eines Wasserversorgungsknotens (140a, 140b, 140c) des Wasserverteilungsnetzes (100);
- Bereitstellen einer Zielvorgabe für eine optimierte Steuerung des Wasserverteilungsnetzes (100);
- Bereitstellen einer Prognose (370) einer Folge von Nennwerten eines Wasserbedarfs für mindestens einen Wasserbedarfsknoten (120a, 120b, 120c, 120d, 120e) innerhalb eines Zeitraums; und
- Bereitstellen eines entsprechenden Unsicherheitsbereichs für jeden Nennwert des Wasserbedarfs; und

eine Steuereinheit, die mit dem Eingangsport gekoppelt ist; und
wobei die Steuereinheit so konfiguriert ist, dass sie mit jedem der mindestens einen Aktuatoren (110a, 110b, 130a, 130b, 130c) des Wasserverteilungsnetzes (100) gekoppelt ist; und
wobei die Steuereinheit dazu konfiguriert ist, ein Verfahren zum Steuern des Wasserverteilungsnetzes (100) gemäß Anspruch 1 bis 10 durchzuführen.

12. Steuergerät gemäß Anspruch 11, umfassend
einen Eingangsport, der dazu konfiguriert ist

- Messwerte einer tatsächlichen Sequenz der abhängigen Variablen des Wasserverteilungsnetzes (100) bereitzustellen.

13. Verwendung des Verfahrens gemäß einem der Ansprüche 1 bis 10 zur Sicherheitssteuerung eines Wasserverteilungsnetzes (100) durch Bereitstellen eines bestimmten Ablaufs von Stellgrößenwerten an jeweilige Aktoren des mindestens einen Aktors (110a, 110b, 130a, 130b, 130c) des Wasserverteilungsnetzes (100).

14. Verwendung eines Verfahrens zum Verifizieren einer bestimmten Folge von Regelgrößenwerten (372) zum Regeln eines Wasserverteilungsnetzes (100) auf der Grundlage eines kontinuierlichen Optimierungsproblems gemäß einem der Ansprüche 1 bis 10,

wobei eine Verifizierungsfolge von Sollwerten eines Wasserbedarfs für jeden mindestens einen Wasserbedarfsknoten innerhalb eines Zeithorizonts bereitgestellt wird; und/oder
wobei eine Modifikation eines anfänglichen hydraulischen Druckwerts für jeden der mindestens einen Wasserversorgungsknoten vorgesehen ist; und
resultierende abhängige Variablenwerte zum Vergleich mit Grenzwerten für die jeweiligen abhängigen Variablen bestimmt werden, vorzugsweise zur Bereitstellung von Sensitivitätsinformationen entsprechender Sequenzen abhängiger Variablenwerte in Bezug auf die Verifizierungssequenz von Nennwerten eines Wasserbedarfs für jeden der mindestens einen Wasserbedarfsknoten 120a, 120b, 120c, 120d, 120e; und/oder in Bezug auf eine Variation des anfänglichen hydraulischen Kopfwerts für jeden der mindestens einen Wasserversorgungsknoten (140a, 140b, 140c) vorgesehen ist,
wobei die Sensitivitätsinformationen einen Status des Wasserverteilungsnetzes (100) charakterisieren, und ferner vorzugsweise, um eine Was-wäre-wenn-Analyse für einen Operator des Wasserverteilungsnetzes (100) zu ermöglichen.

15. Ein Computerprogramm, das Anweisungen umfasst, die, wenn das Programm von einem Computer ausgeführt wird, den Computer veranlassen, ein Verfahren gemäß den Ansprüchen 1 bis 10 auszuführen.

**Revendications**

1. Procédé (300) de commande d'un réseau de distribution d'eau (100), comprenant :

la fourniture d'un modèle hydraulique pour caractériser le réseau de distribution d'eau (100) ;

la fourniture d'une séquence de démarrage de valeurs de variables de commande pour chacun d'au moins un actionneur (110a, 110b, 130a, 130b, 130c) du réseau de distribution d'eau (100) ; et

la fourniture d'une valeur de charge hydraulique initiale (115) pour chacun d'au moins un nœud d'alimentation en eau (140a, 140b, 140c) du réseau de distribution d'eau (100) ;

la fourniture d'un objectif de commande optimisée du réseau de distribution d'eau (100) ;

la fourniture d'une prévision (340) d'une séquence de valeurs nominales d'une demande en eau pour chacun d'au moins un nœud de demande en eau (120a, 120b, 120c, 120d, 120e) du réseau de distribution d'eau (100) dans un horizon temporel ; et

la fourniture d'une plage d'incertitude associée pour chaque valeur nominale de la demande en eau ;

la détermination d'une séquence de valeurs de variables de commande pour chacun du ou des actionneurs (110a, 110b, 130a, 130b, 130c) pour commander le réseau de distribution d'eau (100) sur la base d'un problème d'optimisation continue pour commander le réseau de distribution d'eau (100) en fonction de l'objectif, dans lequel le problème d'optimisation continue utilise exclusivement des variables de commande continues et des variables dépendantes continues [cl.4], et dans lequel un module de résolution pour le problème d'optimisation continue est configuré pour être démarré sur la base de la valeur de charge hydraulique initiale fournie pour chacun du ou des nœuds d'alimentation en eau (140a, 140b, 140c) et/ou sur la base de la séquence de démarrage fournie de valeurs de variables de commande ; et sur la base de la prévision fournie ; et

dans lequel les valeurs des variables de commande sont optimisées en tenant compte de la plage d'incertitude de demande en eau fournie pour chacun d'au moins un nœud de demande en eau (120a, 120b, 120c, 120d, 120e) ; et

dans lequel les variables de la séquence de valeurs de variables de commande (372) sont déterminées comme devant être fournies au ou aux actionneurs (110a, 110b, 130a, 130b, 130c) pour commander le réseau de distribution d'eau (100) dans l'horizon temporel.

2. Procédé selon la revendication 1, dans lequel la séquence de démarrage de valeurs de variables de commande pour chacun du ou des actionneurs du réseau de distribution d'eau (100) est fournie par des valeurs respectives, qui sont déterminées pendant une opération précédente du réseau de distribution d'eau (100).

3. Procédé selon la revendication 1, comprenant en outre :

l'exécution d'une optimisation nominale (330) pour le réseau de distribution d'eau (100), pour déterminer la séquence de démarrage de valeurs de variables de commande pour chacun du ou des actionneurs (110a, 110b, 130a, 130b, 130c) ; dans lequel l'optimisation nominale :

est basée sur le modèle hydraulique pour décrire le réseau de distribution d'eau (100) ;

est basée sur une séquence fournie de valeurs de démarrage d'optimisation techniques possibles pour les variables de commande pour chacun du ou des actionneurs ; et

est basée sur la valeur de charge hydraulique initiale du ou des nœuds d'alimentation en eau ; et

est basée sur une prévision initiale fournie de la séquence de valeurs nominales de la demande en eau (342) pour le ou les nœuds de demande en eau (120a, 120b, 120c, 120d, 120e).

4. Procédé selon l'une quelconque des revendications précédentes, dans lequel le problème d'optimisation continue utilise exclusivement les variables de commande continues et les variables dépendantes continues, pour activer une procédure de démarrage à chaud pour le problème d'optimisation continue.

5. Procédé selon l'une quelconque des revendications précédentes, dans lequel le problème d'optimisation continue est fourni par une reformulation d'un problème d'optimisation sur la base de contraintes complémentaires, dans lequel le problème d'optimisation continue est basé sur des variables continues ; et dans lequel de préférence une reformulation pour démarrer et/ou arrêter les actionneurs (110a, 110b, 130a, 130b, 130c) du réseau de distribution d'eau (100) utilise exclusivement des variables continues.

6. Procédé selon l'une quelconque des revendications précédentes, dans lequel le problème de commande continue est résolu pour déterminer la séquence de valeurs de variables continues pour chacun du ou des actionneurs (110a, 110b, 130a, 130b, 130c) par l'application d'un procédé d'optimisation robuste, dans lequel le procédé d'optimisation robuste prend en compte, lors de la résolution du problème de commande continue, la plage d'incertitude de demande respective pour le ou les nœuds de demande en eau (120a, 120b, 120c, 120d, 120e).

7. Procédé selon l'une quelconque des revendications précédentes, dans lequel le problème de commande continue est résolu pour déterminer la séquence de valeurs de variables de commande pour chacun du ou des actionneurs (110a, 110b, 130a, 130b, 130c) par l'application du procédé d'optimisation robuste, dans lequel le procédé d'optimisation robuste prend en compte, lors de la résolution du problème de commande continue, une plage d'incertitude pour la valeur de charge hydraulique initiale.

8. Procédé selon l'une quelconque des revendications précédentes, dans lequel le problème d'optimisation continue comprend :

l'objectif ; et
une caractérisation du modèle hydrodynamique en termes de variables de commande et de variables dépendantes du réseau de distribution d'eau (100) ; et
une relation qui met en correspondance la prévision de la demande en eau (340) par rapport au temps avec les variables dépendantes respectives ; et
une relation qui met en correspondance la charge hydrodynamique initiale du nœud d'alimentation en eau respectif (140a, 140b, 140c) avec les variables dépendantes respectives.

9. Procédé selon l'une quelconque des revendications précédentes, comprenant en outre les étapes suivantes :

la fourniture d'une prévision mise à jour de la séquence de valeurs nominales de la demande en eau pour le ou les nœuds de demande en eau (120a, 120b, 120c, 120d, 120e) dans un horizon temporel mis à jour ;
la fourniture d'une plage d'incertitude associée mise à jour pour chaque valeur nominale prévue mise à jour de la demande en eau ;
la fourniture d'une valeur de charge hydraulique initiale mise à jour mesurée du ou des nœuds d'alimentation en eau (140a, 140b, 140c) ;
la détermination d'une séquence de valeurs de variables dépendantes du réseau de distribution d'eau (100), dans lequel la séquence de valeurs de variables dépendantes est basée sur la séquence déterminée de valeurs de variables de commande du ou des actionneurs ;
de préférence, la mesure d'au moins une valeur de variable dépendante réelle du réseau de distribution d'eau (100) ; et
la comparaison de la prévision mise à jour de la séquence de valeurs nominales de la demande en eau (340, 344) pour le ou les nœuds de demande en eau dans au moins des parties de l'horizon temporel mis à jour avec une prévision précédente (340) de la séquence de valeurs nominales de la demande en eau pour le ou les nœuds de demande en eau (120a, 120b, 120c, 120d, 120e) dans les parties respectives de l'horizon temporel ; et/ou
la comparaison de la plage d'incertitude associée mise à jour pour chaque valeur nominale de la demande en eau avec une plage d'incertitude associée précédente pour chaque valeur nominale de la demande en eau ; et/ou
de préférence, la comparaison de la ou des valeurs de variables dépendantes mesurées du réseau de distribution d'eau (100) avec la partie respective de la séquence déterminée des variables dépendantes du réseau de distribution d'eau (100) ; et
le déclenchement et l'exécution (362) d'une détermination (370) d'une séquence mise à jour de valeurs de variables de commande (372) pour chacun du ou des actionneurs (110a, 110b, 130a, 130b, 130c) pour commander le réseau de distribution d'eau (100), si une valeur de différence respective de la comparaison respective est supérieure à une valeur seuil respective pour la comparaison respective, sur la base des valeurs de variables de commande optimisées d'une exécution de détermination précédente pour déterminer la séquence de valeurs de variables de commande (372) ; et
dans lequel la détermination d'une séquence mise à jour de valeurs de variables de commande est basée sur le problème d'optimisation continue pour commander le réseau de distribution d'eau (100) en fonction de l'objectif ; et
dans lequel les valeurs des variables de commande (372) sont optimisées en tenant compte de la plage d'incertitude de demande mise à jour pour chacun du ou des nœuds de demande en eau (120a, 120b, 120c, 120d, 120e) ; et
dans lequel les valeurs de la séquence des valeurs des variables de commande (372) sont optimisées en tenant compte de la prévision mise à jour (344) de la séquence de valeurs nominales de la demande en eau pour le ou les nœuds de demande en eau (120a, 120b, 120c, 120d, 120e) dans l'horizon temporel, et en tenant compte de la valeur de charge hydraulique initiale mise à jour du ou des nœuds d'alimentation en eau (140a, 140b, 140c).

10. Procédé selon l'une quelconque des revendications précédentes, dans lequel l'objectif pour la commande optimisée du réseau de distribution d'eau (100) comprend l'énergie consommée du réseau de distribution d'eau (100) ; et/ou les coûts énergétiques du réseau de distribution d'eau (100) ; et/ou une pression maximale dans le réseau de distribution d'eau (100) ; et/ou un nombre de démarrages et/ou d'arrêts du ou des actionneurs du réseau de distribution d'eau (100).

11. Dispositif de commande pour commander un réseau de distribution d'eau (100), comprenant un port d'entrée, qui est configuré pour :

- fournir un modèle hydraulique pour caractériser le réseau de distribution d'eau (100) ;
- fournir une séquence de valeurs de variables de commande (372) pour chacun d'au moins un actionneur (110a, 110b, 130a, 130b, 130c) du réseau de distribution d'eau (100) ; et
- fournir une valeur de charge hydraulique initiale correspondante d'au moins un nœud d'alimentation en eau (140a, 140b, 140c) du réseau de distribution d'eau (100) ;
- fournir un objectif de commande optimisée du réseau de distribution d'eau (100) ;
- fournir une prévision (370) d'une séquence de valeurs nominales d'une demande en eau pour au moins un nœud de demande en eau (120a, 120b, 120c, 120d, 120e) dans une période temporelle ; et
- fournir une plage d'incertitude correspondante pour chaque valeur nominale de la demande en eau ; et

une unité de commande, qui est couplée au port d'entrée ; et dans lequel l'unité de commande est configurée pour être couplée à chacun du ou des actionneurs (110a, 110b, 130a, 130b, 130c) du réseau de distribution d'eau (100) ; et
dans lequel l'unité de commande est configurée pour exécuter un procédé de commande du réseau de distribution d'eau (100) selon les revendications 1 à 10.

12. Dispositif de commande selon la revendication 11, comprenant :
un port d'entrée, qui est configuré pour

- fournir des valeurs de mesure d'une séquence réelle des variables dépendantes du réseau de distribution d'eau (100).

13. Utilisation du procédé selon l'une quelconque des revendications 1 à 10 pour la commande sécurisée d'un réseau de distribution d'eau (100) par la fourniture d'une séquence déterminée de valeurs de variables de commande à des actionneurs respectifs du ou des actionneurs (110a, 110b, 130a, 130b, 130c) du réseau de distribution d'eau (100).

14. Utilisation d'un procédé de vérification d'une séquence déterminée de valeurs de variables de commande (372) pour commander un réseau de distribution d'eau (100), sur la base d'un problème d'optimisation continue selon l'une quelconque des revendications 1 à 10, dans laquelle

une séquence de vérification de valeurs nominales d'une demande en eau pour chacun d'au moins un nœud de demande en eau dans un horizon temporel est fournie ; et/ou dans laquelle
une modification d'une valeur de charge hydraulique initiale pour chacun d'au moins un nœud d'alimentation en eau est fournie ; et
des valeurs de variables dépendantes résultantes sont déterminées pour une comparaison avec des valeurs limites pour les variables dépendantes respectives, de préférence pour fournir des informations de sensibilité de séquences correspondantes de valeurs de variables dépendantes par rapport à la séquence de vérification de valeurs nominales d'une demande en eau pour chacun du ou des nœuds de demande en eau (120a, 120b, 120c, 120d, 120e) ; et/ou par rapport à une variation de la valeur de charge hydraulique initiale pour chacun d'au moins un nœud d'alimentation en eau (140a, 140b, 140c), les informations de sensibilité caractérisant un état du réseau de distribution d'eau (100), et de préférence pour activer en outre une analyse par simulation pour un opérateur du réseau de distribution d'eau (100).

15. Programme informatique comprenant des instructions, qui, lorsque le programme est exécuté par un ordinateur, amènent l'ordinateur à mettre en œuvre un procédé selon l'une quelconque des revendications 1 à 10.

Fig. 1

Fig. 2

Fig. 3

Fig. 4

**REFERENCES CITED IN THE DESCRIPTION**

**Patent documents cited in the description**

• WO 2013026731 A1